# EUROPEAN PATENT APPLICATION

(11) **EP 4 488 830 A1**
(43) Date of publication of application: **08.01.2025**
(21) Application number: 23765735.8
(22) Date of filing: 14.02.2023
(51) Int. Cl.: G06F 9/448

(54) **SUB APPLICATION RUNNING METHOD AND APPARATUS, ELECTRONIC DEVICE, PROGRAM PRODUCT, AND STORAGE MEDIUM**

(30) Priority: 08.03.2022 CN 202210220011
(71) Applicant: Tencent Technology (Shenzhen) Company Limited, Shenzhen, Guangdong 518057 (CN)
(72) Inventor: GUO, Peiran, Shenzhen, Guangdong 518057 (CN); ZHANG, Deming, Shenzhen, Guangdong 518057 (CN); LIANG, Zhaopeng, Shenzhen, Guangdong 518057 (CN); HU, Haojun, Shenzhen, Guangdong 518057 (CN); HUANG, Jisheng, Shenzhen, Guangdong 518057 (CN); CAI, Jingwei, Shenzhen, Guangdong 518057 (CN); LIN, Zheng, Shenzhen, Guangdong 518057 (CN); HUANG, Yuhui, Shenzhen, Guangdong 518057 (CN); ZHAO, Jingchen, Shenzhen, Guangdong 518057 (CN)
(74) Representative: Nederlandsch Octrooibureau
(86) International application number: PCT/CN2023/075850
(87) International publication number: WO 2023/169157

(57) **Abstract**

The present application relates to the technical field of computers, and discloses a sub application running method and apparatus, an electronic device, a program product, and a storage medium. The method comprises: in response to a running instruction for a target sub application on a target operating system, obtaining page data of the target sub application, the runtime of the target sub application being provided by a parent application or being run independently of the parent application; rendering the page data of the target sub application by a browser to obtain a display page of the target sub application, the browser being any browser installed on the target operating system; and displaying the display page of the target sub application on the basis of the browser. A browser kernel is unrelated to the release version of the target operating system, so that the display page of the target sub application is obtained by rendering by means of the browser kernel and the display page is displayed on the basis of the browser, and thus the target sub application is run in multiple release versions of the target operating system.

## Description

### RELATED APPLICATION

This application claims priority to Chinese Patent Application No. 202210220011.5, entitled "SUB-APPLICATION RUNNING METHOD AND APPARATUS, ELECTRONIC DEVICE, PROGRAM PRODUCT, AND STORAGE MEDIUM", and filed with the China National Intellectual Property Administration on March 8, 2022.

### FIELD OF THE TECHNOLOGY

Embodiments of this application relate to the field of computer technologies, and in particular, to a sub-application running method and apparatus, an electronic device, a program product, and a storage medium.

### BACKGROUND OF THE DISCLOSURE

With the continuous development of computer technologies, sub-applications have been widely used. A sub-application, also referred to as a mini program, is a program that is executable without being downloaded and installed. The running of the sub-application usually depends on a parent application, and the parent application provides a basic running environment for the sub-application.

In the related technologies, the sub-application may run in any operating system such as an Android operating system (OS), an iOS, a macOS, or a Windows OS. Using an Android operating system as an example, the Android operating system provides a unified graphical user interface (GUI) framework. The GUI framework is used for rendering a display page of a sub-application to implement running of the sub-application in the Android operating system. However, some operating systems have numerous release versions, and different release versions of operating systems differ greatly. Therefore, different release versions of operating systems support different GUI frameworks, making it difficult for sub-applications to run in these operating systems.

### SUMMARY

Embodiments of this application provide a sub-application running method and apparatus, an electronic device, a program product, and a storage medium, helping resolve the problem in the related art that it is difficult for sub-applications to run in some operating systems. The technical solution includes the following content.

According to one aspect, an embodiment of this application provides a sub-application running method, executable by an electronic device, the method including:
obtaining page data of a sub-application in response to an instruction to run the sub-application, a running environment of the sub-application being executed within a parent application running in an operating system, OS, installed in the electronic device;
rendering the page data of the sub-application through a browser invoked by the parent application or the sub-application to obtain a display page of the sub-application, the browser executed in the target operating system; and
displaying the display page of the sub-application in an interface of the sub-application.

According to another aspect, an embodiment of this application provides a sub-application running apparatus, the apparatus including:
an obtaining module, configured to obtain page data of a sub-application in response to an instruction to run the sub-application, a running environment of the sub-application being executed within a parent application running in an operating system, OS, installed in the electronic device;
a rendering module, configured to render the page data of the sub-application through a browser invoked by the parent application or the sub-application to obtain a display page of the sub-application, the browser executed in the target operating system; and
a display module, configured to display the display page of the sub-application in an interface of the sub-application.

According to another aspect, an embodiment of this application provides an electronic device, including a processor and a memory, the memory storing at least one computer program, the at least one computer program being loaded and executed by the processor to cause the electronic device to implement any one of the sub-application running methods described above.

According to another aspect, a computer-readable storage medium is further provided, storing at least one computer program, the at least one computer program being loaded and executed by a processor to cause a computer to implement any one of the sub-application running methods described above.

According to another aspect, a computer program or a computer program product is further provided, storing at least one computer program, the at least one computer program being loaded and executed by a processor to cause a computer to implement any one of the sub-application running methods described above.

### BRIEF DESCRIPTION OF THE DRAWINGS

To describe the technical solutions of the embodiments of this application more clearly, the following briefly introduces the accompanying drawings required for describing the embodiments. Apparently, the accompanying drawings in the following description show only some embodiments of this application, and a person of ordinary skill in the art may still derive other drawings from these accompanying drawings without creative efforts.
FIG. 1 is a schematic diagram of an implementation environment of a sub-application running method according to an embodiment of this application.
FIG. 2 is a flowchart of a sub-application running method according to an embodiment of this application.
FIG. 3 is a schematic diagram of a running environment of a just-in-time compiled coding language according to an embodiment of this application.
FIG. 4 is a schematic diagram of a rendering process according to an embodiment of this application.
FIG. 5 shows a display page of a sub-application according to an embodiment of this application.
FIG. 6 is a frame diagram showing running of a sub-application according to an embodiment of this application.
FIG. 7 is a schematic structural diagram of a sub-application running apparatus according to an embodiment of this application.
FIG. 8 is a schematic structural diagram of a terminal device according to an embodiment of this application.
FIG. 9 is a schematic structural diagram of a server according to an embodiment of this application.

### DESCRIPTION OF EMBODIMENTS

To make the objectives, technical solutions, and advantages of this application clearer, the following further describes implementations of this application in detail with reference to the accompanying drawings.

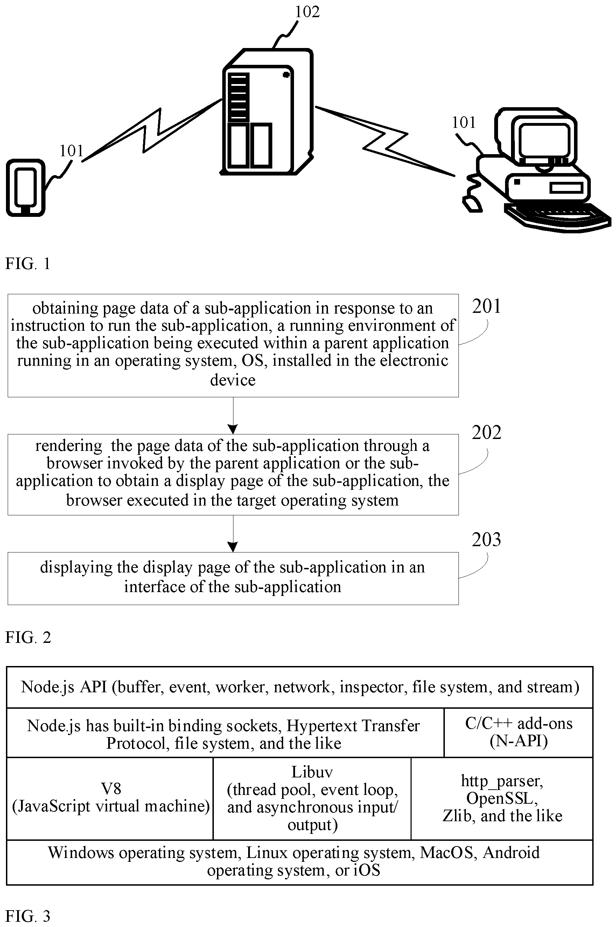

FIG. 1 is a schematic diagram of an implementation environment of a sub-application running method according to an embodiment of this application. As shown in FIG. 1, the implementation environment includes a terminal device 101 and a server 102. The sub-application running method in this embodiment of this application may be performed by the terminal device 101, or performed by the terminal device 101 and the server 102 jointly.

The terminal device 101 may be a smartphone, a game console, a desktop computer, a tablet computer, a laptop computer, a smart television, a smart vehicle-mounted device, a smart voice interaction device, a smart home appliance, or the like. The server 102 may be one server, or a server cluster including a plurality of servers, or either one of a cloud computing platform and a virtualization center. This is not limited in this embodiment of this application. The server 102 may be communicatively connected to the terminal device 101 through a wired network or a wireless network. The server 102 may have functions such as data processing, data storage, and data sending and receiving. This is not limited in this embodiment of this application. There may be one or more terminal devices 101 and servers 102, and the quantities are not limited.

Based on the foregoing implementation environment, an embodiment of this application provides a sub-application running method. A flowchart that is of a sub-application running method provided in an embodiment of this application and that is shown in FIG. 2 is used as an example. The method may be performed by the terminal device 101 in FIG. 1, or may be performed by the terminal device 101 and the server 102 jointly. For ease of description, the terminal device 101 or the server 102 that performs the sub-application running method in this embodiment of this application is referred to as an electronic device. In other words, the sub-application running method provided in this embodiment of this application may be performed by an electronic device. As shown in FIG. 2, the method includes step 201 to step 203.

Step 201. Obtain page data of a sub-application in response to an instruction to run the sub-application, a running environment of the sub-application being executed within a parent application running in an operating system, OS, installed in the electronic device. In the embodiments of the present disclosure including the embodiments of both the claims and the specification (hereinafter referred to as "all embodiments of the present disclosure"), the sub-application is obtained through development based on a running environment provided by the parent application. The running environment is used for executing logic code of a sub-application.

In all embodiments of the present disclosure, the sub-application is obtained through development based on a running environment provided by the parent application. The parent application is any application, and may run in a plurality of operating systems including the operating system. Code of the running environment provided by the parent application may serve as framework code of the sub-application. Compilation is performed based on the framework code of the sub-application to obtain a program file of the sub-application, thereby implementing development of the sub-application. The program file of the sub-application includes the framework code of the sub-application, and the like.

In all embodiments of the present disclosure, an operating system of the electronic device is the operating system. The operating system includes a Linux operating system, a Windows operating system, a macOS, an Android operating system, an iOS, or the like. The Linux operating system is a multi-user and multi-task operating system based on a portable operating system interface (POSIX) that supports multi-threading and multi-central processing units (CPUs).

The electronic device may be a vehicle-mounted device. An operating system of the vehicle-mounted device is generally a Linux operating system, having problems such as lack of applications and high development costs. According to the sub-application running method in all embodiments of the present disclosure, running the sub-application in the vehicle-mounted device can enrich the vehicle ecosystem. The electronic device may alternatively be a service processing device. An operating system of the service processing device may also be a Linux operating system. Applications in the service processing device need to be specially developed, with high development costs, long cycles, and slow iterations. According to the sub-application running method in all embodiments of the present disclosure, running the sub-application in the service processing device can reduce the development costs, increase an iteration speed, and improve user experience.

The sub-application can run in the operating system. The sub-application may be any sub-application, and a type of the sub-application is not limited in this embodiment of this application. For example, the sub-application is an instant messaging sub-application (used for instant messaging), or a video-type sub-application (which can provide a video), or a game-type sub-application (supporting game running).

A zygote process runs in the operating system of the electronic device. The zygote process can be split to obtain a main process, and ensure that the main process runs in the operating system of the electronic device (that is, ensure that the main process survives). The main process is used for monitoring an instruction to run the sub-application on the operating system. When the main process detects the instruction to run the sub-application on the operating system, the electronic device can obtain the running instruction.

Optionally, before the obtaining page data of a sub-application in response to an instruction to run the sub-application on an operating system, the method further includes: displaying at least one candidate sub-application identifier; and in response to a selection of one of the at least one candidate sub-application identifier, generating an instruction to run a sub-application corresponding to the one of the at least one candidate sub-application identifier.

In all embodiments of the present disclosure, the main process is used for managing a program file of each sub-application. A program file of any sub-application includes logic code of the sub-application and page code of the sub-application. The page code of the sub-application includes page data of the sub-application, a sub-application identifier of the sub-application, and the like.

Any browser is installed in the operating system of the electronic device. The browser may be a browser built in the operating system, or may be a third-party browser installed on the operating system. The browser includes a browser kernel. The browser kernel is a rendering engine used by the browser, and can determine a display manner of content of a display page, format information, or the like. The browser kernel may include a Hypertext Transfer Protocol (HTTP) client. An HTTP server is included in the main process to enable communication between the browser kernel and the main process through the HTTP.

Because the program file of the each sub-application that is managed by the main process each includes a sub-application identifier, the electronic device can obtain at least one sub-application identifier based on the main process, each obtained sub-application identifier being each candidate sub-application identifier, and display the each candidate sub-application identifier based on the browser. After detecting a select operation for any candidate sub-application identifier, the electronic device generates an instruction to run a sub-application corresponding to the any candidate sub-application identifier on the operating system. In response to the running instruction, page data of the sub-application is obtained.

Optionally, after detecting a select operation for any candidate sub-application identifier, the browser kernel of the electronic device generates an instruction to run a sub-application corresponding to the any candidate sub-application identifier on the operating system, and sends the running instruction to the main process of the electronic device. The main process sends the program file of the sub-application to the browser kernel in response to the running instruction. The program file of the sub-application includes the page data of the sub-application. In other words, the browser kernel obtains the page data of the sub-application.

In a possible implementation, the obtaining page data of a sub-application includes: obtaining logic code of the sub-application by a main process; in the running environment, running the logic code of the sub-application based on a service process of the sub-application; and obtaining the page data of the sub-application based on the a running result of the logic code of the sub-application.

In all embodiments of the present disclosure, after obtaining the instruction to run the sub-application on the operating system, the main process sends the running instruction to the zygote process. The zygote process is split to obtain the service process of the sub-application in response to the running instruction, sends a start instruction for the service process of the sub-application to the main process, and establishes cross-process communication between the main process and the service process of the sub-application.

The main process sends the program file of the sub-application to the service process of the sub-application. The program file of the sub-application includes the logic code of the sub-application and framework code of the sub-application. After obtaining the program file of the sub-application, the service process of the sub-application of the electronic device runs the logic code of the sub-application and the framework code of the sub-application, to implement running of the logic code of the sub-application in the running environment, to obtain a running result of the logic code of the sub-application, and sends the running result of the logic code of the sub-application to the browser kernel. The main process sends the program file of the sub-application to the browser kernel. The program file of the sub-application includes the page data of the sub-application. The browser kernel determines, in the program file of the sub-application, the page data of the sub-application according to the running result of the logic code of the sub-application. In this manner, the electronic device is caused to obtain the page data of the sub-application.

Optionally, the logic code of the sub-application is compiled based on an application programming interface (API) of the operating system. The API of the operating system is compiled by a compiled coding language based on the running environment of a just-in-time compiled coding language.

In all embodiments of the present disclosure, the logic code of the sub-application is compiled based on a large number of APIs. These APIs can be roughly divided into two categories. One is an API related to the operating system, such as an API related to a file system or an API related to a network. The other is an API related to hardware of an electronic device, such as an API related to camera content reading.

The API related to the operating system may be compiled based on the running environment of the just-in-time compiled coding language. FIG. 3 is a schematic diagram of a running environment of a just-in-time compiled coding language according to an embodiment of this application. The running environment of the just-in-time compiled coding language is Node.js.

Node.js applicable to a Windows operating system, a Linux operating system, a MacOS, an Android operating system, an iOS, and other operating systems. Based on Node.js, many APIs related to the operating system can be coded. These APIs may be referred to as Node.js APIs. The Node.js APIs include an API related to a buffer, an API related to events, an API related to a worker, an API related to a network, an API related to an inspector, an API related to a file system (FS), an API related to a stream, and the like.

A plurality of data transmission manners are built in and bound to Node.js. These data transmission manners include a socket, a Hypertext Transfer Protocol, an FS, and the like. In addition, Node.js can support components written in C coding language and C++ coding language in a form of plug-ins. The components compiled in the C coding language may be referred to as C add-ons. The components compiled in the C++ coding language may be referred to as C++ add-ons. The C add-ons or C++ add-ons may be collectively referred to as C/C++ add-ons, or N-APIs.

Node.js is embedded with V8. V8 is a JavaScript virtual machine for running code compiled in JavaScript coding language (JS coding language for short). Node.js includes a Libuv library. The Libuv library is compiled in C language, has high portability, and supports a thread pool, an event loop, and asynchronous input/output (async I/O). Node.js further supports http_parser (a library for an HTTP parser), OpenSSL (a cryptographic library), Zlib (a base library), and the like. The HTTP parser is an HTTP message parser compiled in C coding language, can parse requests and respond to requests, and is designed for high-performance HTTP applications. OpenSSL is a secure socket layer (SSL) cryptographic library, including cryptographic algorithms, key and certificate encapsulation management functions, SSL protocols, and the like. Zlib provides a function library for data compression.

In all embodiments of the present disclosure, the API related to the operating system may be compiled in a compiled coding language based on Node.js or a running environment of a just-in-time compiled coding language other than Node.js. The compiled coding languages include just-in-time compiled coding languages such as JavaScript coding language, process-oriented coding languages such as C coding language, and object-oriented coding languages such as C++ coding language. Costs of implementing APIs are reduced through the running environment of the just-in-time compiled coding language.

Because the API related to the operating system is compiled based on the running environment of the just-in-time compiled coding language, the API related to the operating system may run in the running environment of the just-in-time compiled coding language, or may run in a running environment other than the running environment of the just-in-time compiled coding language. Other running environments are not limited in this embodiment of this application.

The API related to the hardware of the electronic device needs to be compiled based on device information of the electronic device by using a coding language supported by the electronic device. The API related to the hardware of the electronic device may run in the running environment of the just-in-time compiled coding language.

Optionally, the main process and the service process of the sub-application are run in the running environment of the just-in-time compiled coding language. The main process communicates with the service process of the sub-application through sockets.

In all embodiments of the present disclosure, the main process and the service process of the sub-application both may be compiled by using at least one of the just-in-time compiled coding language, or the process-oriented coding language, or the object-oriented coding language, and run in the running environment of the just-in-time compiled coding language. The main process and the service process of the sub-application are obtained by splitting a zygote process. The zygote process may be compiled by using a just-in-time compiled coding language, and run based on a running environment of the just-in-time compiled coding language. Communication between the zygote process and the main process, communication between the zygote process and the service process of the sub-application, and communication between the main process and the service process of the sub-application are all performed through sockets.

In addition, the main process and the service process of the sub-application may further communicate with the browser kernel. The main process communicates with the browser kernel through the HTTP. The service process of the sub-application communicates with the browser kernel through WebSocket.

At least one sub-application is executable in the operating system, and each sub-application corresponds to one service process. Any sub-application running in the operating system can be the sub-application.

Step 202. Render the page data of the sub-application through a browser invoked by the parent application or the sub-application to obtain a display page of the sub-application, the browser being executed in the operating system.

In all embodiments of the present disclosure, the page data of the sub-application is obtained through compilation by using a web front-end technology, and the page data of the sub-application is rendered based on the browser kernel to obtain the display page of the sub-application. Through the browser in the operating system and the web front-end technology, a user interface (UI) of a sub-application is presented in the operating system.

In all embodiments of the present disclosure, the page data includes native component data suitable for rendering by a native component in the operating system. The rendering the page data of the sub-application through a browser to obtain a display page of the sub-application includes:
rendering the native component data in the page data by the browser instead of the native component in the operating system. Since the same browser may be executed in operating systems with different native components, the same sub-application in this embodiment of this application may be executed in operating systems of different native components, without the need to develop sub-applications for the different native components, thereby improving convenience of executing sub-applications in a plurality of devices (or operating systems), and further improving convenience of data processing in the plurality of devices (or operating systems).

In all embodiments of the present disclosure, the page data of the sub-application includes native component data and non-native component data. The rendering the page data of the sub-application through the browser invoked by the parent application or the sub-application to obtain the display page of the sub-application includes: rendering the native component data through a first rendering process of the browser to obtain a display page corresponding to the native component data; rendering the non-native component data through a second rendering process of the browser to obtain a display page corresponding to the non-native component data; and determining the display page of the sub-application based on the display page corresponding to the native component data and the display page corresponding to the non-native component data.

The native component data is code data related to the native component. The non-native component data is code data related to the non-native component. Generally, a component on the display page of the sub-application may be classified into a native component or a non-native component according to a rendering type. The native component is rendered by a GUI frame of the operating system. The non-native component is rendered by a web view. In all embodiments of the present disclosure, the native component and the non-native component are both rendered by a web view of the browser kernel.

In all embodiments of the present disclosure, the native component data is obtained through compilation by using the web front-end technology, and the web view renders the native component data through the first rendering process to obtain the display page corresponding to the native component data. In addition, the non-native component data is also obtained through compilation by using the web front-end technology, and the web view renders the non-native component data through the second rendering process to obtain the display page corresponding to the non-native component data. Compared with rendering native component data and non-native component data in the same process, rendering native component data and non-native component data respectively through two rendering processes can reduce an amount of data that needs to be rendered by a rendering process and prevent frame freezing from occurring, thereby helping improve a response speed to an electronic device that runs a sub-application and execution efficiency.

In all embodiments of the present disclosure, the non-native component data includes at least one piece of inline frame data. The inline frame embeds HTML documents within other HTML documents while allowing the user to interact with the content. Each piece of inline frame data is used for representing content data of one page, and is, for example, <iframe> code. The rendering the non-native component data through a second rendering process to obtain a display page corresponding to the non-native component data includes: rendering the each piece of inline frame data through each second rendering process to obtain a display page corresponding to the each piece of inline frame data; and determining the display page corresponding to the non-native component data based on the display page corresponding to the each piece of inline frame data.

In all embodiments of the present disclosure, the non-native component data includes at least one piece of inline frame data, any piece of inline frame data is data of an inline frame, and the inline frame is used for embedding another web page at any location in a web page. In other words, one piece of inline frame data corresponds to one web page, and a display page corresponding to the non-native component can be obtained based on at least one web page.

Generally, <iframe> may be used as a tag of the inline frame. Therefore, the inline frame data is <iframe> code. One <iframe> code is used for hosting one web page of the sub-application. The <iframe> code includes a uniform resource locator (URL), and the URL is often assigned a keyword "src", that is, src=URL.

During rendering of the at least one piece of inline frame data, the same domain name may be assigned to a keyword of a URL in the each piece of inline frame data, to render the each piece of inline frame data through the same rendering process, to obtain a display page corresponding to the each piece of inline frame data. The display pages corresponding to all the pieces of inline frame data are stitched or superimposed to obtain the display page corresponding to the non-native component.

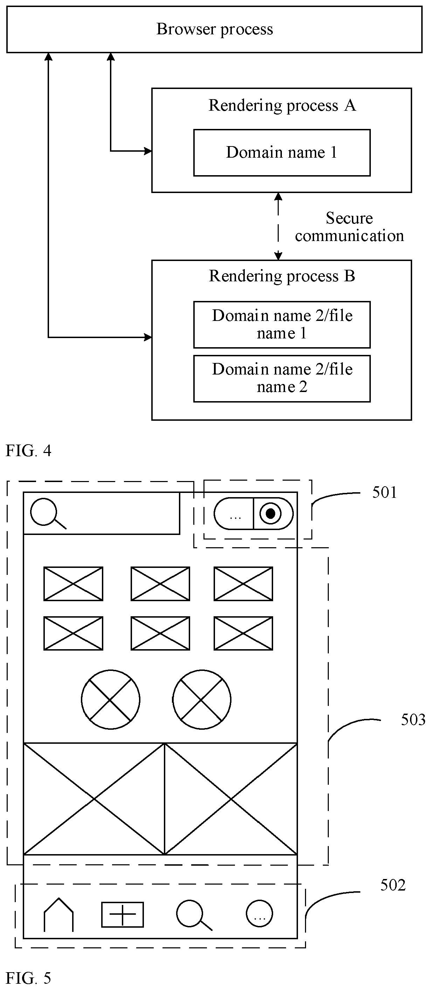

FIG. 4 is a schematic diagram of a rendering process according to an embodiment of this application. A browser kernel renders page data of a sub-application based on a browser process. Page data of a sub-application includes native component data and non-native component data.

For the native component data, data corresponding to "domain name 1" is rendered in a rendering process A, represented as a domain name assigned to "domain name 1" by a keyword of a URL in the native component data, and the native component data is rendered through the rendering process A.

For the non-native component data, data corresponding to "domain name 2/file name 1" and data corresponding to "domain name 2/file name 2" are rendered in a rendering process B, representing that the non-native component data includes two pieces of inline frame data. The same domain name "domain name 2" is assigned to keywords of URLs in the two pieces of inline frame data, and the two pieces of non-native component data are rendered through the rendering process B. "File name 1" is a file name of one piece of inline frame data, "/" is a delimiter, and "file name 2" is a file name of the other piece of inline frame data.

Optionally, during rendering of the at least one piece of inline frame data, a different domain name may be assigned to a keywords of a URL in the each piece of inline frame data, to respectively render the pieces of inline frame data through different rendering processes, to obtain a display page corresponding to the each piece of inline frame data. Rendering the pieces of inline frame data through different rendering processes can reduce an amount of data of each rendering process and improve rendering efficiency, and in combination with a multi-core CPU, occurrence of frame freezing can be reduced. Subsequently, the display pages corresponding to all the pieces of inline frame data are stitched or superimposed to obtain the display page corresponding to the non-native component.

After the display page corresponding to the native component data and the display page corresponding to the non-native component data are obtained, the display page corresponding to the native component data and the display page corresponding to the non-native component data may be superimposed to obtain the display page of the sub-application. Optionally, the display page corresponding to the native component data may be superimposed on the display page corresponding to the non-native component data, or the display page corresponding to the non-native component data may be superimposed on the display page corresponding to the native component data. This is not limited in this embodiment of this application. Alternatively, the display page corresponding to the native component data and the display page corresponding to the non-native component data may be stitched to obtain the display page of the sub-application.

FIG. 5 shows a display page of a sub-application according to an embodiment of this application. The display page of the sub-application is obtained by superimposing a display page corresponding to non-native component data on a display page corresponding to native component data. The display page corresponding to the native component data includes native components shown by a reference numeral 501 and native components shown by a reference numeral 502. The display page corresponding to the non-native component data includes non-native components shown by a reference numeral 503.

In a possible implementation, the page data of the sub-application includes native component data and non-native component data. The rendering the page data of the sub-application through the browser invoked by the parent application or the sub-application to obtain the display page of the sub-application includes: rendering the native component data through a first rendering process of the browser to obtain a display page corresponding to the native component data; rendering the non-native component data on the display page corresponding to the native component data through a second rendering process of the browser to obtain the display page of the sub-application.

In all embodiments of the present disclosure, different domain names may be assigned to a keyword of a URL in the native component data and a keyword of a URL in the non-native component data to render the native component data through the first rendering process to obtain the display page corresponding to the native component data, and render the non-native component data through the second rendering process on the display page corresponding to the native component data to directly render a non-native component on the display page corresponding to the native component data to obtain the display page of the sub-application.

In an embodiment, the non-native component data includes at least one piece of inline frame data. The same domain name may be assigned to a keyword of a URL in each piece of inline frame data to render the each piece of inline frame data through the same second rendering process on the display page corresponding to the native component data to obtain the display page of the sub-application.

In an embodiment, the non-native component data includes at least one piece of inline frame data. A different domain name may be assigned to a keyword of a URL in each piece of inline frame data to render the each piece of inline frame data through a different second rendering process on the display page corresponding to the native component data to obtain the display page of the sub-application. A priority of each second rendering process may be determined first, and the each piece of inline frame data is sequentially rendered through the each second rendering process on the display page corresponding to the native component data according to the priority of the each second rendering process to obtain the display page of the sub-application.

In a possible implementation, the page data of the sub-application includes native component data and non-native component data. The rendering the page data of the sub-application to obtain a display page of the sub-application includes: rendering the non-native component data through a second rendering process to obtain a display page corresponding to the non-native component data; and rendering the native component data on the display page corresponding to the non-native component data through a first rendering process to obtain the display page of the sub-application.

In all embodiments of the present disclosure, different domain names may be assigned to a keyword of a URL in the native component data and a keyword of a URL in the non-native component data to render the non-native component data through the second rendering process to obtain the display page corresponding to the non-native component data, and render the native component data through the first rendering process on the display page corresponding to the non-native component data to directly render a native component on the display page corresponding to the non-native component data to obtain the display page of the sub-application.

In all embodiments of the present disclosure, the non-native component data includes at least one piece of inline frame data. The same domain name may be assigned to a keyword of a URL in each piece of inline frame data to render the each piece of inline frame data through the same second rendering process to obtain a display page corresponding to the each piece of inline frame data, and the display pages of all the pieces of inline frame data are superimposed or stitched to obtain the display page corresponding to the non-native component data.

Optionally, the non-native component data includes at least one piece of inline frame data. A different domain name may be assigned to a keyword of a URL in each piece of inline frame data to render the each piece of inline frame data through the different second rendering process to obtain a display page corresponding to the each piece of inline frame data, and the display pages of all the pieces of inline frame data are superimposed or stitched to obtain the display page corresponding to the non-native component data.

In addition to rendering the native component data, the first rendering process may also run framework code of the sub-application. The sub-application is obtained through development based on the framework code of the sub-application. The parent application is not limited in this embodiment of this application. For example, the parent application is an instant messaging application or a financial application.

Step 203. Display the display page of the sub-application in an interface of the sub-application.

In all embodiments of the present disclosure, a browser kernel may run the framework code of the sub-application, so that the browser can provide a running environment of the sub-application. On the basis that the browser provides the running environment of the sub-application, the display page of the sub-application is displayed based on the browser to make it easier for a user to perform an operation on the display page.

In a possible implementation, the display page of the sub-application includes a quick response code (QR code), and after the displaying the display page of the sub-application, the method further includes: in response to obtaining a code scanning confirmation instruction of the parent application for the QR code, switching from the display page of the sub-application to a next page indicated by the QR code.

In all embodiments of the present disclosure, the display page of the sub-application may include a QR code. The QR code is a black and white image that records data symbol information using specific geometric figures that are distributed on a plane according to a particular rule. For example, when the display page of the sub-application is a login page, the display page of the sub-application may include a QR code for scanning to log in. Alternatively, when the display page of the sub-application is a payment page, the display page of the sub-application may include a QR code for scanning to pay.

For the display page of the sub-application that includes a QR code, the user may use a code scanning function in the parent application to scan the QR code to obtain a code scanning result page. The code scanning result page includes a confirmation control. After the user clicks/taps on the confirmation control, an electronic device may receive a code scanning confirmation instruction for the QR code through the parent application. In this case, a next page indicated by the QR code is switched from the display page of the sub-application.

Optionally, the electronic device at which the parent application is located may be an electronic device different from or the same as an electronic device at which the browser is located. This is not limited in this embodiment of this application.

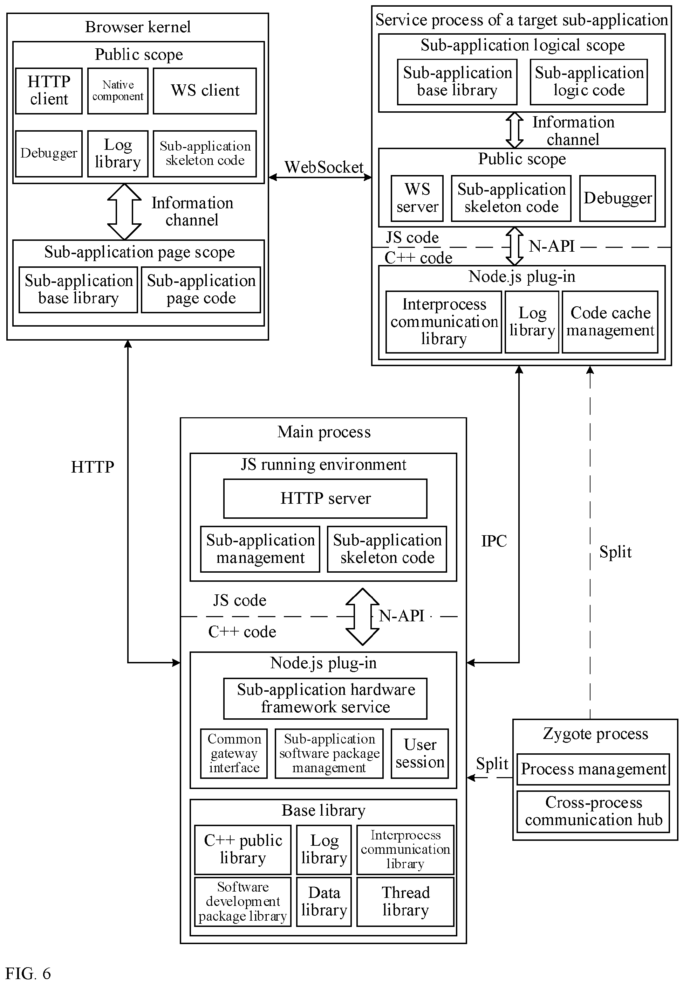

The foregoing is an explanation of the sub-application running method of the embodiments of this application from the perspective of method steps. The following further explains the sub-application running method of the embodiments of this application with reference to FIG. 6. FIG. 6 is a frame diagram showing running of a sub-application according to an embodiment of this application. An electronic device in this embodiment of this application includes a browser kernel, a main process, a service process of a sub-application, and a zygote process.

The zygote process can be split to obtain the main process and the service process of the sub-application, and manage the main process and the service process of the sub-application, to ensure that the main process and the service process of the sub-application can communicate across processes. Therefore, the zygote process has a function of a cross-process communication hub.

The main process is compiled by using JS coding language and C++ coding language. Code obtained through compilation by using JS coding language is referred to as JS code. The JS code corresponds to a JS running environment. The JS running environment includes an HTTP server (a server that uses HTTP communication), configured to communicate with an HTTP client (a client that uses HTTP communication) process of the browser kernel. The JS running environment may further perform sub-application management. Code obtained through compilation by using C++ coding language is referred to as C++ code. The C++ code includes a Node.js plug-in (also referred to as Node Addon). The Node Addon supports a sub-application hardware frame (WeChat Mini-Program Framework, WMPF) service, a common gateway interface (CGI), sub-application software package management, and a user session. The sub-application software package is the program file of the sub-application mentioned above. The program file of the sub-application includes sub-application page code, sub-application logic code, and sub-application framework code. The sub-application framework code is the framework code of the sub-application mentioned above. The Node Addon supports a base library. The base library includes, but is not limited to, a C++ public library (such as wxBase), a log library (such as wxLog), an interprocess communication library (such as wxIpc), a software development package library (such as iLink), a data library (such as mmkv), a thread library (such as Future), and the like. The JS code and the C++ code are associated through an N-API technology.

The browser kernel includes a public scope and a sub-application page scope. The public scope is equivalent to the first rendering process mentioned above, and is used for rendering native component data. The public scope includes the HTTP client, for communicating with the HTTP server in the main process. The public scope may further include a WS client (a client that uses WebSocket communication), for communicating with a WS server (a server that uses WebSocket communication) in the service process of the sub-application. The public scope may obtain a native component through rendering, has a function of a debugger, and can run the sub-application framework code and support the log library. The sub-application page scope is equivalent to the second rendering process mentioned above, and is used for rendering non-native component data. The sub-application page scope supports a sub-application base library, and can run sub-application page code. The sub-application page scope and the public scope communicate through an information channel.

The service process of the sub-application is compiled by using JS coding language and C++ coding language. Code obtained through compilation by using JS coding language is referred to as JS code. The JS code may be divided into two parts: a sub-application logical scope and a public scope. The sub-application logical scope supports a sub-application base library, and can run sub-application logic code. The public scope includes a WS server, for communicating with the WS client in the browser. The public scope runs sub-application framework code and has a function of a debugger. The sub-application logical scope and the public scope communicate through an information channel. Code obtained through compilation by using C++ coding language is referred to as C++ code. The C++ code includes a Node.js plug-in. The Node.js plug-in supports an interprocess communication library, a log library, and code cache management. The JS code and the C++ code are associated through an N-API technology.

The main process and the service process of the sub-application communicate through interprocess communication (IPC). The main process and the browser kernel communicate through the HTTP. The browser kernel and the service process of the sub-application communicate through WebSocket. The IPC communication may be Socket communication.

In all embodiments of the present disclosure, the zygote process is split to obtain the main process first. When the instruction to run the sub-application on the operating system is obtained, the zygote process is split to obtain the service process of the sub-application, and establishes an IPC channel between the main process and the service process of the sub-application, so that IPC communication is performed between the main process and the service process of the sub-application.

The service process of the sub-application obtains a sub-application software package of the sub-application based on the main process. The sub-application software package of the sub-application includes sub-application logic code of the sub-application and sub-application framework code of the sub-application. The service process of the sub-application runs the sub-application logic code of the sub-application and the sub-application framework code of the sub-application. Through running of the sub-application framework code of the sub-application, the service process of the sub-application can be enabled to provide a running environment of the sub-application, and run the sub-application logic code of the sub-application in the running environment, to obtain a running result (which may be referred to as a first running result) of the sub-application logic code of the sub-application. A public scope in the service process of the sub-application runs the sub-application framework code of the sub-application. A sub-application logical scope in the service process of the sub-application runs the sub-application logic code of the sub-application. The sub-application logic code of the sub-application is the logic code of the sub-application mentioned above.

The browser kernel obtains the sub-application software package of the sub-application through the main process. In addition, the browser kernel obtains the running result of the sub-application logic code of the sub-application through the service process of the sub-application, determines the page data of the sub-application in the sub-application software package of the sub-application based on the running result of the sub-application logic code of the sub-application, and renders the page data of the sub-application.

Optionally, the sub-application software package of the sub-application includes the sub-application framework code of the sub-application and the sub-application page code of the sub-application. Based on the running result of the sub-application logic code of the sub-application, the browser kernel determines the native component data in the sub-application framework code of the sub-application and determines the non-native component data in the sub-application page code of the sub-application, to obtain the page data (which may be referred to as first page data) of the sub-application.

The page data of the sub-application includes the native component data and the non-native component data. The public scope of the browser kernel renders the native component data to obtain the display page corresponding to the native component data. The sub-application page scope of the browser kernel renders the non-native component data to obtain the display page corresponding to the non-native component data. The display page corresponding to the native component data and the display page corresponding to the non-native component data are stitched or superimposed to obtain the display page (which may be referred to as a first display page) of the sub-application.

In all embodiments of the present disclosure, the public scope of the browser kernel runs the sub-application framework code of the sub-application and renders the native component data. The sub-application page scope of the browser kernel renders the non-native component data. Through the running of the sub-application framework code of the sub-application, the browser is enabled to provide a running environment of the sub-application, and displays the display page of the sub-application.

Optionally, the main process may further perform CGI communication with the parent application. For example, the main process may receive a code scanning confirmation instruction from the parent application for a QR code included in the display page of the sub-application, and send the code scanning confirmation instruction to the service process of the sub-application, so that the service process of the sub-application runs the logic code of the sub-application again in the running environment based on the code scanning confirmation instruction, to obtain a new running result (which may be referred to as a second running result) of the logic code of the sub-application. The browser kernel obtains the second running result through the service process of the sub-application, determines new page data (which may be referred to as second page data) of the sub-application in the sub-application software package of the sub-application based on the second result, and renders the second page data to obtain a new display page (which may be referred to as a second display page) of the sub-application. In the running environment, the second display page is displayed.

The display page of the sub-application that includes the QR code may be a login page. The main process can manage a login status of the user through the CGI communication with the parent application. The display page of the sub-application that includes the QR code may be a payment page. The main process can manage a payment status through the CGI communication with the parent application.

The information (including, but not limited to, user device information, user personal information, and the like), data (including, but not limited to, data used for analysis, stored data, presented data, and the like), and signals involved in this application are all authorized by the user or fully authorized by all parties, and the collection, usage, and processing of the relevant data need to comply with relevant laws, regulations, and standards of relevant countries and regions. For example, the page data of the sub-application, the logic code of the sub-application, and the like in this application are all obtained with full authorization.

According to the foregoing method, the page data of the sub-application is rendered based on the browser kernel of the browser on the operating system to obtain the display page of the sub-application. The browser kernel is irrelevant to a release version of the operating system. Therefore, in various release versions of operating systems, the page data of the sub-application can be rendered based on the browser kernel to obtain the display page of the sub-application, and the display page of the sub-application can be displayed based on the browser, so that the sub-application is executable in the various release versions of operating systems.

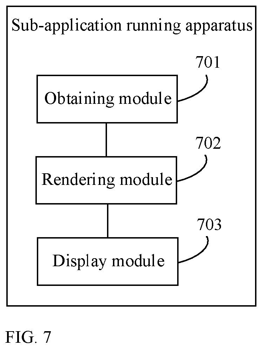

FIG. 7 is a schematic structural diagram of a sub-application running apparatus according to an embodiment of this application. As shown in FIG. 7, the apparatus includes:
an obtaining module 701, configured to obtain page data of a sub-application in response to an instruction to run the sub-application, a running environment of the sub-application being executed within a parent application running in an operating system, OS, installed in the electronic device;
a rendering module 702, configured to render the page data of the sub-application through a browser invoked by the parent application or the sub-application to obtain a display page of the sub-application, the browser executed in the target operating system; and
a display module 703, configured to display the display page of the sub-application in an interface of the sub-application.

In a possible implementation, the apparatus further includes:
the display module 703, further configured to display at least one candidate sub-application identifier; and
a generation module, configured to: in response to a selection of one of the at least one candidate sub-application identifier, generating the instruction to run the sub-application corresponding to the one of the at least one candidate sub-application identifier.

In a possible implementation, the page data of the sub-application includes native component data and non-native component data. The rendering module 702 is configured to render the native component data through a first rendering process to obtain a display page corresponding to the native component data; render the non-native component data through a second rendering process to obtain a display page corresponding to the non-native component data; and determine the display page of the sub-application based on the display page corresponding to the native component data and the display page corresponding to the non-native component data.

In a possible implementation, the non-native component data includes at least one piece of inline frame data, each piece of inline frame data being used for representing content data of one page. The rendering module 702 is configured to render the each piece of inline frame data through a respective second rendering process to obtain a display page corresponding to the each piece of inline frame data; and determine the display page corresponding to the non-native component data based on the display page corresponding to the each piece of inline frame data.

In a possible implementation, the page data of the sub-application includes native component data and non-native component data. The rendering module 702 is configured to render the native component data through a first rendering process to obtain a display page corresponding to the native component data; and render the non-native component data on the display page corresponding to the native component data through a second rendering process to obtain the display page of the sub-application.

In a possible implementation, the page data of the sub-application includes native component data and non-native component data. The rendering module 702 is configured to render the non-native component data through a second rendering process of the browser to obtain a display page corresponding to the non-native component data; and render the native component data on the display page corresponding to the non-native component data through a first rendering process of the browser to obtain the display page of the sub-application.

In a possible implementation, the obtaining module 701 is configured to obtain logic code of the sub-application by a main process; in a running environment, run the logic code of the sub-application by a service process of the sub-application; and obtain the page data of the sub-application based on a running result of the logic code of the sub-application.

In a possible implementation, the logic code of the sub-application is compiled based on an API of the operating system, and the API related to the operating system is compiled by using a compiled coding language based on the running environment of a just-in-time compiled coding language.

In a possible implementation, the main process and the service process of the sub-application are run in the running environment of a just-in-time compiled coding language, and the main process communicates with the service process of the sub-application through sockets.

In a possible implementation, the display page of the sub-application includes a QR code, and the display module 703 is further configured to: in response to obtaining a code scanning confirmation instruction of the parent application for the QR code, switch from the display page of the sub-application to a next page indicated by the QR code.

The foregoing apparatus renders the page data of the sub-application based on a browser kernel of the browser on the operating system to obtain the display page of the sub-application. The browser kernel is irrelevant to a release version of the operating system. Therefore, in various release versions of operating systems, the page data of the sub-application can be rendered based on the browser kernel to obtain the display page of the sub-application, and the display page of the sub-application can be displayed based on the browser, so that the sub-application is executable in the various release versions of operating systems.

It is to be understood that when the apparatus provided above in FIG. 7 implements the functions of the apparatus, only division of the foregoing function modules is used as an example for description. During actual application, the functions may be allocated to and completed by different function modules according to requirements. That is, an internal structure of the device is divided into different function modules to complete all or some of the functions described above. In addition, the apparatus provided in the foregoing embodiment is based on the same concept as the method embodiment. For details of a specific implementation process of the apparatus, refer to the method embodiment. Details are not described herein again.

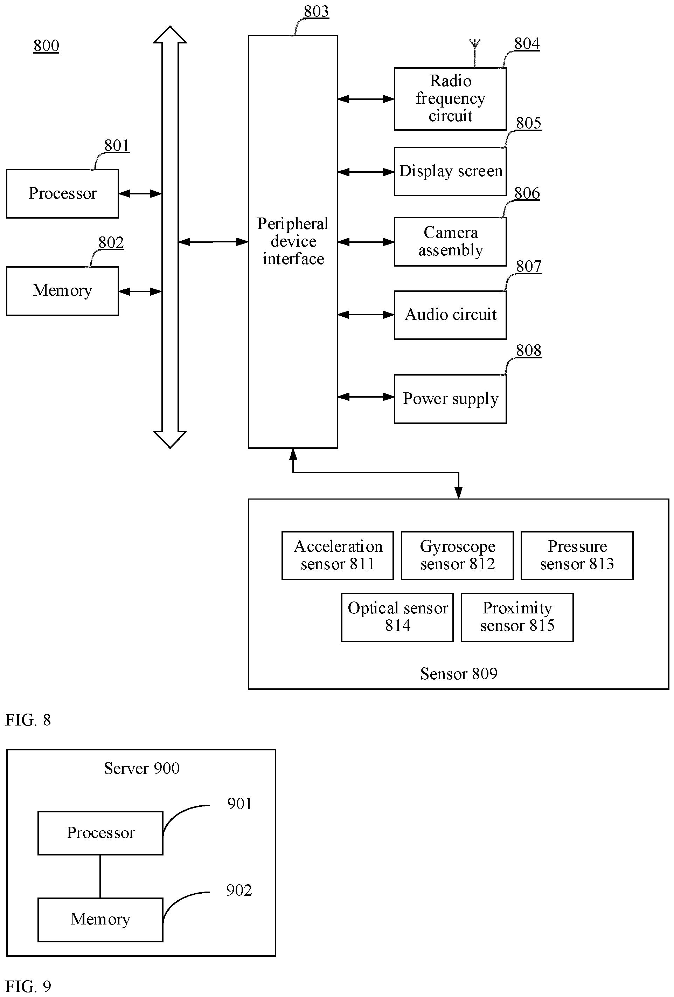

FIG. 8 is a structural block diagram of a terminal device 800 according to an exemplary embodiment of this application. The terminal device 800 includes a processor 801 and a memory 802.

The processor 801 may include one or more processing cores, for example, a 4-core processor or an 8-core processor. The processor 801 may be implemented in at least one hardware form of a digital signal processor (DSP), a field-programmable gate array (FPGA), and a programmable logic array (PLA). The processor 801 may also include a main processor and a coprocessor. The main processor is a processor configured to process data in an awake state, and is also referred to as a CPU. The coprocessor is a low power consumption processor configured to process data in a standby state. In some embodiments, the processor 801 may be integrated with a graphics processing unit (GPU). The GPU is configured to render and draw content that needs to be displayed on a display screen. In some embodiments, the processor 801 may further include an artificial intelligence (AI) processor. The AI processor is configured to process computing operations related to machine learning.

The memory 802 may include one or more computer-readable storage media. The computer-readable storage medium may be non-transitory. The memory 802 may further include a high-speed random access memory and a non-volatile memory, for example, one or more magnetic disk storage devices or flash storage devices. In some embodiments, the non-transitory computer-readable storage medium in the memory 802 is configured to store at least one computer program. The at least one computer program is configured to be executed by the processor 801 to implement the sub-application running method provided in the method embodiment of this application.

In some embodiments, optionally, the terminal device 800 may further include a peripheral device interface 803 and at least one peripheral device. The processor 801, the memory 802, and the peripheral device interface 803 may be connected through a bus or a signal cable. Each peripheral device may be connected to the peripheral device interface 803 through a bus, a signal cable, or a circuit board. Specifically, the peripheral device includes: at least one of a radio frequency (RF) circuit 804, a display screen 805, a camera assembly 806, an audio circuit 807, and a power supply 808.

The peripheral device interface 803 may be configured to connect at least one peripheral device related to input/output (I/O) to the processor 801 and the memory 802. In some embodiments, the processor 801, the memory 802, and the peripheral device interface 803 are integrated on the same chip or circuit board. In some other embodiments, any one or two of the processor 801, the memory 802, and the peripheral device interface 803 may be implemented on a single chip or circuit board. This is not limited in this embodiment.

The RF circuit 804 is configured to receive and transmit an RF signal, also referred to as an electromagnetic signal. The RF circuit 804 communicates with a communication network and other communication devices through the electromagnetic signal. The RF circuit 804 converts an electrical signal into an electromagnetic signal for transmission, or converts a received electromagnetic signal into an electrical signal. Optionally, the RF circuit 804 includes an antenna system, an RF transceiver, one or more amplifiers, a tuner, an oscillator, a digital signal processor, a codec chip set, a subscriber identity module card, and the like. The RF circuit 804 may communicate with another terminal by using at least one wireless communication protocol. The wireless communication protocol includes, but is not limited to: a world wide web, a metropolitan area network, an intranet, generations of mobile communication networks (2G, 3G, 4G, and 5G), a wireless local area network, and/or a wireless fidelity (Wi-Fi) network. In some embodiments, the RF 804 may further include a circuit related to NFC, which is not limited in this application.

The display screen 805 is configured to display a user interface (UI). The UI may include a graph, text, an icon, a video, and any combination thereof. In a case that the display screen 805 is a touch display screen, the display screen 805 further has a capability of acquiring a touch signal on or above a surface of the display screen 805. The touch signal may be inputted to the processor 801 as a control signal for processing. In this case, the display screen 805 may be further configured to provide a virtual button and/or a virtual keyboard that are/is also referred to as a soft button and/or a soft keyboard. In some embodiments, there may be one display screen 805, disposed on a front panel of the terminal device 800. In some other embodiments, there may be at least two display screens 805, respectively disposed on different surfaces of the terminal device 800 or designed in a folded shape. In some other embodiments, the display screen 805 may be a flexible display screen, disposed on a curved surface or a folded surface of the terminal device 800. Even, the display screen 805 may be further set in a non-rectangular irregular pattern, namely, a special-shaped screen. The display screen 805 may be prepared by using a material such as a liquid crystal display (LCD) or an organic light-emitting diode (OLED).

The camera assembly 806 is configured to capture images or videos. Optionally, the camera assembly 806 includes a front-facing camera and a rear-facing camera. Generally, the front-facing camera is disposed on the front panel of the terminal, and the rear-facing camera is disposed on a back surface of the terminal. In some embodiments, there are at least two rear-facing cameras, each being any one of a main camera, a depth-of-field camera, a wide-angle camera, and a telephoto camera, to achieve a background blur function through fusion of the main camera and the depth-of-field camera, panoramic photographing and virtual reality (VR) photographing functions through fusion of the main camera and the wide-angle camera, or other fusion photographing functions. In some embodiments, the camera assembly 806 may further include a flash. The flash may be a monochrome temperature flash, or may be a double color temperature flash. The double color temperature flash refers to a combination of a warm light flash and a cold light flash, and may be used for light compensation under different color temperatures.

The audio circuit 807 may include a microphone and a speaker. The microphone is configured to collect sound waves of a user and an environment, and convert the sound waves into an electrical signal to input to the processor 801 for processing, or input to the RF circuit 804 for implementing voice communication. For the purpose of stereo collection or noise reduction, there may be a plurality of microphones, respectively disposed at different portions of the terminal device 800. The microphone may further be an array microphone or an omni-directional collection type microphone. The speaker is configured to convert the electrical signal from the processor 801 or the RF circuit 804 into sound waves. The speaker may be a conventional film speaker, or may be a piezoelectric ceramic speaker. When the speaker is the piezoelectric ceramic speaker, the speaker not only can convert an electrical signal into acoustic waves audible to a human being, but also can convert an electrical signal into acoustic waves inaudible to a human being, for ranging and other purposes. In some embodiments, the audio circuit 807 may further include an earphone jack.

The power supply 808 is configured to supply power to components in the terminal device 800. The power supply 808 may be an alternating current, a direct current, a primary battery, or a rechargeable battery. In a case that the power supply 808 includes a rechargeable battery, the rechargeable battery may be a wired rechargeable battery or a wireless rechargeable battery. The wired rechargeable battery is a battery charged through a wired circuit. The wireless rechargeable battery is a battery charged through a wireless coil. The rechargeable battery may be further configured to support a fast charging technology.

In some embodiments, the terminal device 800 further includes one or more sensors 809. The one or more sensors 809 include, but are not limited to: an acceleration sensor 811, a gyroscope sensor 812, a pressure sensor 813, an optical sensor 814, and a proximity sensor 815.

The acceleration sensor 811 may detect a magnitude of acceleration on three coordinate axes of a coordinate system established with the terminal device 800. For example, the acceleration sensor 811 may be configured to detect components of gravity acceleration on the three coordinate axes. The processor 801 may control, according to a gravity acceleration signal collected by the acceleration sensor 811, the display screen 805 to display the user interface in a landscape view or a portrait view. The acceleration sensor 811 may be further configured to collect motion data of a game or a user.

The gyroscope sensor 812 may detect a body direction and a rotation angle of the terminal device 800. The gyroscope sensor 812 may cooperate with the acceleration sensor 811 to collect a 3D action by the user on the terminal device 800. The processor 801 may implement the following functions according to the data collected by the gyroscope sensor 812: motion sensing (such as changing the UI according to a tilt operation of the user), image stabilization at shooting, game control, and inertial navigation.

The pressure sensor 813 may be disposed on a side frame of the terminal device 800 and/or a lower layer of the display screen 805. When the pressure sensor 813 is disposed on the side frame of the terminal device 800, a holding signal of the user on the terminal device 800 may be detected. The processor 801 performs left and right hand recognition or a quick operation according to the holding signal collected by the pressure sensor 813. When the pressure sensor 813 is disposed on the low layer of the display screen 805, the processor 801 controls, according to a pressure operation of the user on the display screen 805, an operable control on the UI. The operable control includes at least one of a button control, a scroll-bar control, an icon control, and a menu control.

The optical sensor 814 is configured to collect ambient light intensity. In an embodiment, the processor 801 may control display luminance of the display screen 805 according to the ambient light intensity collected by the optical sensor 814. Specifically, when the ambient light intensity is relatively high, the display luminance of the display screen 805 is increased. When the ambient light intensity is relatively low, the display luminance of the display screen 805 is reduced. In another embodiment, the processor 801 may further dynamically adjust a camera parameter of the camera assembly 806 according to the ambient light intensity collected by the optical sensor 814.

The proximity sensor 815, also referred to as a distance sensor, is generally disposed on the front panel of the terminal device 800. The proximity sensor 815 is configured to collect a distance between the user and the front surface of the terminal device 800. In an embodiment, when the proximity sensor 815 detects that the distance between the user and the front surface of the terminal device 800 gradually becomes smaller, the processor 801 controls the display screen 805 to switch from a screen-on state to a screen-off state. When the proximity sensor 815 detects that the distance between the user and the front surface of the terminal device 800 gradually becomes larger, the processor 801 controls the display screen 805 to switch from a screen-off state to a screen-on state.

A person skilled in the art may understand that the structure shown in FIG. 8 constitutes no limitation on the terminal device 800, and the terminal device may include more or fewer components than those shown in the figure, or some components may be combined, or a different component deployment may be used.

FIG. 9 is a schematic structural diagram of a server according to an embodiment of this application. The server 900 may vary a lot due to different configurations or performance, and may include one or more processors 901 and one or more memories 902. The one or more memories 902 store at least one computer program, the at least one computer program being loaded and executed by the one or more processors 901 to implement the sub-application running method provided in the foregoing method embodiments. For example, the processor 901 is a CPU. Certainly, the server 900 may alternatively have a wired or wireless network interface, a keyboard, an I/O interface, and other components to facilitate I/O. The server 900 may alternatively include other components for implementing device functions. Details are not described herein.

In an exemplary embodiment, a computer-readable storage medium is further provided, storing at least one computer program, the computer program being loaded and executed by a processor to cause an electronic device to implement any one of the sub-application running methods described above.

Optionally, the foregoing computer-readable storage medium may be a read-only memory (ROM), a random access memory (RAM), a compact disc ROM (CD-ROM), a magnetic tape, a floppy disk, an optical data storage device, or the like.

In an exemplary embodiment, a computer program or a computer program product is further provided, storing at least one computer program, the at least one computer program being loaded and executed by a processor to cause a computer to implement any one of the sub-application running methods described above.

It is to be understood that, "a plurality of" mentioned in this specification means two or more. The term "and/or" describes an association relationship between associated objects and represents that three types of relationships may exist. For example, A and/or B may represent the following three cases: only A exists, both A and B exist, and only B exists. The character "/" generally indicates that the associated objects are in an "or" relationship.

The sequence numbers of the foregoing embodiments of this application are merely for description purpose but do not imply the preference among the embodiments.

The foregoing descriptions are merely exemplary embodiments of this application, but are not intended to limit this application. Any modification, equivalent replacement, or improvement made within the principle of this application shall fall within the protection scope of this application.

## Claims

1. A sub-application running method, executable by an electronic device, the method comprising:
obtaining page data of a sub-application in response to an instruction to run the sub-application, a running environment of the sub-application being executed within a parent application running in an operating system, OS, installed in the electronic device;
rendering the page data of the sub-application through a browser invoked by the parent application or the sub-application to obtain a display page of the sub-application, the browser executed in the target operating system; and
displaying the display page of the sub-application in an interface of the sub-application.

2. The method according to claim 1, wherein the page data comprises native component data corresponding to a native component in the operating system; and the rendering the page data of the sub-application through the browser invoked by the parent application or the sub-application to obtain the display page of the sub-application comprises:
rendering the native component data in the page data by the browser.

3. The method according to claim 1, wherein before the obtaining page data of a sub-application in response to an instruction to run the sub-application, a running environment of the sub-application being executed within a parent application running in the OS, installed in the electronic device, the method further comprises:
displaying at least one candidate sub-application identifier; and
in response to a selection of one of the at least one candidate sub-application identifier, generating the instruction to run the sub-application corresponding to the one of the at least one candidate sub-application identifier.

4. The method according to claim 1, wherein the page data of the sub-application comprises native component data and non-native component data; and the rendering the page data of the sub-application through the browser invoked by the parent application or the sub-application to obtain the display page of the sub-application comprises:
rendering the native component data through a first rendering process to obtain a display page corresponding to the native component data;
rendering the non-native component data through a second rendering process to obtain a display page corresponding to the non-native component data; and
determining the display page of the sub-application based on the display page corresponding to the native component data and the display page corresponding to the non-native component data.

5. The method according to claim 4, wherein the non-native component data comprises at least one piece of inline frame data, each piece of inline frame data representing content data of one page; and
the rendering the non-native component data through a second rendering process to obtain a display page corresponding to the non-native component data comprises:
rendering the each piece of inline frame data through a respective second rendering process to obtain a display page corresponding to the each piece of inline frame data; and
determining the display page corresponding to the non-native component data based on the display page corresponding to the each piece of inline frame data.

6. The method according to claim 1, wherein the page data of the sub-application comprises native component data and non-native component data; and the rendering the page data of the sub-application through the browser invoked by the parent application or the sub-application to obtain the display page of the sub-application comprises:
rendering the native component data through a first rendering process of the browser to obtain a display page corresponding to the native component data; and
rendering the non-native component data on the display page corresponding to the native component data through a second rendering process of the browser to obtain the display page of the sub-application.

7. The method according to claim 1, wherein the page data of the sub-application comprises native component data and non-native component data; and the rendering the page data of the sub-application to obtain a display page of the sub-application comprises:
rendering the non-native component data through a second rendering process of the browser to obtain a display page corresponding to the non-native component data; and
rendering the native component data on the display page corresponding to the non-native component data through a first rendering process of the browser to obtain the display page of the sub-application.

8. The method according to claim 1, wherein the obtaining page data of a sub-application comprises:
obtaining logic code of the sub-application by a main process;
running the logic code of the sub-application in the running environment, based on a service process of the sub-application; and
obtaining the page data of the sub-application based on a running result of the logic code of the sub-application.

9. The method according to claim 8, wherein the logic code of the sub-application is compiled based on an application programming interface (API) of the operating system, and the API of the operating system is compiled by a compiled coding language, based on the running environment of a just-in-time compiled coding language.

10. The method according to claim 8, wherein the main process and the service process of the sub-application are run in the running environment of a just-in-time compiled coding language, and the main process communicates with the service process of the sub-application through sockets.

11. The method according to any one of claims 1 to 10, wherein the display page of the sub-application comprises a quick response code (QR code), and after the displaying the display page of the sub-application in an interface of the sub-application, the method further comprises:
in response to obtaining a code scanning confirmation instruction of the parent application for the QR code, switching from the display page of the sub-application to a next page indicated by the QR code.

12. A sub-application running apparatus, the apparatus comprising:
an obtaining module, configured to obtain page data of a sub-application in response to an instruction to run the sub-application, a running environment of the sub-application being executed within a parent application running in an operating system, OS, installed in the electronic device;
a rendering module, configured to render the page data of the sub-application through a browser invoked by the parent application or the sub-application to obtain a display page of the sub-application, the browser executed in the target operating system; and
a display module, configured to display the display page of the sub-application in an interface of the sub-application.

13. An electronic device, comprising a processor and a memory, the memory storing at least one computer program, the at least one computer program being loaded and executed by the processor to cause the electronic device to implement the sub-application running method according to any one of claims 1 to 11.

14. A computer-readable storage medium, storing at least one computer program, the at least one computer program being loaded and executed by a processor to cause a computer to implement the sub-application running method according to any one of claims 1 to 11.

15. A computer program product, storing at least one computer program, the at least one computer program being loaded and executed by a processor to cause a computer to implement the sub-application running method according to any one of claims 1 to 11.
